# EUROPÄISCHE PATENTSCHRIFT

(11) **EP 3 444 411 B1**
(45) Veröffentlichungstag und Bekanntmachung des Hinweises auf die Patenterteilung: **29.12.2021**
(21) Anmeldenummer: 18187067.6
(22) Anmeldetag: 02.08.2018
(51) Int. Cl.: E04B 1/58, E04C 3/28, B62D 65/18, F16S 3/04

(54) **SCHUTZABDECKUNG FÜR EIN PROFILROHRSYSTEM**
PROTECTIVE COVERING FOR A PROFILE PIPE SYSTEM
COUVERCLE DE PROTECTION POUR UN SYSTÈME DE TUBES PROFILÉS

(30) Priorität: 15.08.2017 DE 102017214213
(43) Veröffentlichungstag der Anmeldung: 20.02.2019
(73) Patentinhaber: Rixen, Wolfgang, 42699 Solingen (DE); Pies, Gerrit, 42699 Solingen (DE)
(72) Erfinder: Barnat, Tobias, 42653 Solingen (DE); Mostert, Stefan, 40670 Meerbusch (DE)
(74) Vertreter: BRP Renaud & Partner mbB Rechtsanwälte Patentanwälte Steuerberater

(56) Entgegenhaltungen:
- EP-A1- 0 320 176
- DE-U1-202009 008 687
- DE-U1-202015 006 861
- DE-U1-202016 004 142

## Beschreibung

Die vorliegende Erfindung betrifft eine Schutzabdeckung für ein Profilrohrsystem mit zumindest zwei Profilrohren, die über ein Verbindungselement im Wesentlichen orthogonal miteinander verbunden sind, gemäß dem Oberbegriff des Anspruchs 1. Die Erfindung betrifft außerdem ein Profilrohrsystem mit einer solchen Schutzabdeckung.

Profilrohrsysteme sind hinlänglich bekannt, bspw. auch aus der DE 20 2015 006 861 U1 und können zu unterschiedlichsten Konstruktionszwecken und Aufgaben eingesetzt werden.

Um insbesondere in einer Industrieproduktion, bspw. bei einer Fließband- oder Linienproduktion, bei welcher kratzempfindliche Oberflächen, wie beispielsweise lackierte Karosserieteile, Verwendung finden, diese vor Beschädigungen zu schützen, sind darüber hinaus Schutzprofilsysteme bekannt, ebenfalls bspw. aus der DE 20 2015 006 861 U1. Derartige Schutzprofilsysteme sind insbesondere wichtig, da eine Beschädigung einer lackierten Oberfläche in einer Fertigungsstraße in der Automobilproduktion oftmals zu einem sofortigen Stopp der gesamten Fertigungslinie führt, um das beschädigte Bauteil oder Automobil aussondern zu können. Anschließend müssen wiederum Vorkehrungen getroffen werden, um das zuvor ausgesonderte Automobil bzw. Bauteil wieder in die Fertigungslinie zu integrieren. Dies ist alles mit sehr hohen Kosten verbunden und zwar nicht nur für die hierfür abzustellenden Arbeitskräfte und das Material, sondern auch für den hierdurch erforderlichen Logistikaufwand.

Aus der DE 20 2016 004 142 U1 ist eine gattungsgemäße Schutzabdeckung für ein Profilrohrsystem bekannt, die ein mit einem ersten Schutzabdeckungsteil verbindbares zweites Schutzabdeckungsteil mit einer Rastverbindung aufweist. Die vorliegende Erfindung beschäftigt sich daher mit dem Problem, für eine Schutzabdeckung der gattungsgemäßen Art eine verbesserte oder zumindest alternative Ausführungsform anzugeben, mit welcher eine Schutzwirkung durch eine einfach zu montierende Schutzabdeckung weiter gesteigert werden kann.

Dieses Problem wird erfindungsgemäß durch den Gegenstand des unabhängigen Anspruchs gelöst. Vorteilhafte Ausführungsformen sind Gegenstand der abhängigen Ansprüche. Die vorliegende Erfindung beruht auf dem allgemeinen Gedanken, erstmals auch Eckverbindungsbereiche von zwei Profilrohren mittels einer entsprechenden Schutzabdeckung abzudecken und dadurch evtl. anstoßende Bauteile besser vor einer Beschädigung schützen zu können. Das erfindungsgemäße Profilrohrsystem weist dabei zumindest zwei Profilrohre auf, die über ein Verbindungselement im Wesentlichen rechtwinklig, das heißt orthogonal, miteinander verbunden, insbesondere verschraubt oder verhakt, sind. Erfindungsgemäß ist nun eine Schutzabdeckung vorgesehen, die zwei miteinander verbindbare Schutzabdeckungsteile, nämlich ein erstes Schutzabdeckungsteil und ein zweites Schutzabdeckungsteil, aufweist, die in montiertem Zustand das Verbindungselement überdeckt. Neben den bereits aus der DE 20 2015 006 861 U1 bekannten Schutzprofilen, die einfach mit den Profilrohren verclipsbar sind und diese außerhalb von Verbindungsbereichen abdecken, ist es mit der erfindungsgemäßen Schutzabdeckung somit erstmals möglich, auch bislang nicht mit Schutzprofilen abdeckbare Bereiche im Bereich einer Eckverbindung abzudecken und dadurch mit einem Schutzüberzug gegen Beschädigungen zu versehen. Eine derartige Schutzabdeckung ist insbesondere bei berührungsempfindlichen Bauteilen, wie bspw. lackierten Fahrzeugtüren, von größter Wichtigkeit, da hier bereits geringe Berührungen zu einem Verkratzen bzw. Beschädigen des Lacks führen können. Dies erfordert nicht nur eine teure Reparatur, sondern unter Umständen auch ein Aussondern dieser Fahrzeugtür aus einer Fertigungslinie mit einem anschließenden, aufwendigen wieder Integrieren der reparierten Fahrzeugtür in die Fertigungslinie. Mit der erfindungsgemäßen Schutzabdeckung können die in dem erfindungsgemäßen Profilrohrsystem verwendeten Profilrohre jedoch auch in den bislang nicht abgedeckten Verbindungsbereichen, insbesondere Eckbereichen, erstmals abgedeckt und damit geschützt werden. Um dabei die Schutzabdeckung einfach und insbesondere auch ohne Werkzeug montieren zu können, sind erfindungsgemäß am ersten Schutzabdeckungsteil eine Rastkontur und eine Gegenrastkontur und am zweiten Schutzabdeckungsteil eine komplementär dazu ausgebildete Gegenrastkontur und Rastkontur angeordnet, so dass die beiden Schutzabdeckungsteile über zwei Rastverbindungen aneinander festlegbar sind. Rein theoretisch könnten selbstverständlich auch zwei Rastkonturen bzw. zwei Gegenrastkonturen am ersten oder am zweiten Schutzabdeckungsteil angeordnet sein. Unabhängig von der Anzahl der gewählten Rastverbindungen ist es dabei vorteilhaft, dass sich die beiden Schutzabdeckungsteile als Gleichteile ausbilden und dadurch kostengünstig mit insbesondere einem einzigen Kunststoffspritzgusswerkzeug herstellen lassen. Über derartige Rastverbindungen kann insbesondere auch eine Montage der Schutzabdeckung vergleichsweise einfach und zuverlässig erfolgen, da erstens kein separates Werkzeug benötigt und zweitens dem Nutzer ein optisches, akustisches und/oder haptisches Signal beim Schließen der Rastverbindungen gegeben wird. Eine derartige Rastverbindung bietet darüber hinaus den großen Vorteil, dass diese lösbar ist, wodurch die Schutzabdeckung im Bedarfsfall auch wieder abgenommen und das Profilrohrsystem abgebaut werden kann.

Bei einer vorteilhaften Weiterbildung der Erfindung ist vorgesehen, dass an dem ersten Schutzabdeckungsteil eine zweite Rastkontur und eine zweite Gegenrastkontur und an dem zweiten Schutzabdeckungsteil eine komplementär dazu ausgebildete zweite Gegenrastkontur und eine zweite Rastkontur angeordnet sind, so dass die beiden Schutzabdeckungsteile über insgesamt vier Rastverbindungen aneinander festlegbar sind. Die Rastkontur und die zweite Rastkontur können dabei in Form von einander zugewandten aber um 180° verdrehte Rasthaken ausgebildet sein und erhöhen die Zuverlässigkeit der Verbindung der beiden Schutzabdeckungsteile miteinander. Da die beiden Schutzabdeckungsteile vorzugsweise als kostengünstige, gummiartige und damit weiche und eine Stoßwirkung absorbierende Teile ausgebildet sind, ist das Vorsehen der zweiten Rastkonturen und der zweiten Gegenrastkonturen durch eine einfache und einmalige Änderung eines Kunststoffspritzgusswerkzeugs möglich.

Bei einer vorteilhaften Weiterbildung der Erfindung ist vorgesehen, dass an dem ersten Schutzabdeckungsteil eine dritte Rastkontur und eine dritte Gegenrastkontur und an dem zweiten Schutzabdeckungsteil eine komplementär dazu ausgebildete dritte Gegenrastkontur und eine dritte Rastkontur angeordnet sind, so dass die beiden Schutzabdeckungsteile über insgesamt sechs Rastverbindungen aneinander festlegbar sind. Hierdurch kann die Fixierung der beiden Schutzabdeckungsteile aneinander nochmals verbessert werden.

Bei einer vorteilhaften Weiterbildung der erfindungsgemäßen Lösung sind/ist das erste Schutzabdeckungsteil und/oder das zweite Schutzabdeckungsteil jeweils als einstückige, gummiartige Kunststoffspritzgussteile ausgebildet. Dies ermöglicht nicht nur eine qualitativ hochwertige, sondern zugleich auch eine kostengünstige Herstellung der Schutzabdeckungsteile und damit auch der Schutzabdeckung. Durch die gummiartigen Schutzabdeckungsteile sind diese weich und können eine Stoßwirkung besonders gut absorbieren.

Erfindungsgemäß weist die Schutzabdeckung einen hohlzylindrischen Abschnitt und einen sich daran anschließenden spitzen Abschnitt auf, wobei der spitze Abschnitt zwei orthogonal zueinander laufende Flanken aufweist, die jeweils eine bogenförmige Ausnehmung für ein orthogonal zu den beiden Profilrohren verlaufendes Profilrohr aufweisen. Der hohlzylindrische Abschnitt dient dabei zum Umfassen des Verbindungselementes, während der spitze Abschnitt mit den beiden orthogonal zueinander verlaufenden Flanken ein Einschieben der Schutzabdeckung bis in die Ecke ermöglicht und insbesondere auch die Abdeckung mittels zweier Schutzabdeckungen von zwei orthogonal aufeinander zulaufenden Profilrohren und einem orthogonal zu diesen beiden Profilrohren verlaufenden Profilrohr ermöglicht. Durch die orthogonal zueinander verlaufenden Flanken des spitzen Abschnitts liegen bei vier jeweils orthogonal zueinander angeordneten und mit einem im Zentrum verbundenen Profilstab verlaufenden Profilstäben die insgesamt vier Schutzabdeckungen an ihren Flanken jeweils aneinander an.

Erfindungsgemäß ist die jeweilige Rastkontur als Rasthaken ausgebildet, der einen gebogenen Rücken aufweist, der bei montierter Schutzabdeckung oberflächenfluchtend mit einer Oberfläche des hohlzylindrischen Abschnitts der Schutzabdeckung verläuft. Dies bietet den großen Vorteil, dass zum einen die Rastverbindung, hier also der Rasthaken, von außen leicht zugänglich ist, wodurch ein Lösen und auch eine Demontage der Schutzabdeckung vergleichsweise einfach möglich sind. Zum anderen bilden die Rastverbindungen keinerlei Störkonturen, welche ebenfalls zu einer Beschädigung von berührungssensiblen Oberflächen beitragen könnten. Durch die oberflächenfluchtende Anordnung der Rasthaken aufgrund ihres gekrümmten Rückens kann zudem auch eine haptisch wahrnehmbare Störung der Oberfläche nahezu vollständig vermieden werden. Auch kann eine optische Sichtkontrolle der korrekt geschlossenen Rastverbindungen vergleichsweise einfach durchgeführt werden, da in diesem Fall der gebogene Rücken oberflächenfluchtend mit der umgebenden Oberfläche des hohlzylindrischen Abschnitts verläuft.

Zweckmäßig weist das Verbindungselement zwei Halbschalen auf, die über eine Schraubverbindung miteinander verschraubt sind, wobei jede Halbschale eine quer zur Längsrichtung verlaufende Durchgangsöffnung zur Aufnahme der Schraubverbindung besitzt und wobei die Schraubverbindung in montiertem Zustand vertieft in der Durchgangsöffnung angeordnet ist. Jedes Schutzabdeckungsteil weist dabei ein Positionierelement aufweist, welches komplementär zur Durchgangsöffnung ausgebildet ist und welches bei auf dem Verbindungselement montiertem Schutzabdeckungsteil in die Durchgangsöffnung eingreift und darüber das Schutzabdeckungsteil relativ zur jeweiligen Halbschale des Verbindungselements positioniert. Hierdurch ist eine sehr einfache und eindeutige Ausrichtung bzw. Festlegung der Schutzabdeckungsteile am zugehörigen Verbindungselement möglich.

Bei einer weiteren vorteilhaften Ausführungsform des erfindungsgemäßen Profilrohrsystems, weisen/weist das erste Schutzabdeckungsteil und/oder das zweite Schutzabdeckungsteil Aussteifungsrippen auf. Derartige Aussteifungsrippen können je nach Anordnung die Elastizität der Schutzabdeckung beeinflussen, so dass derartige Aussteifungsrippen in einem Produktionsbereich, in welchem besonders hoch sensible und stoßempfindliche Bauteile mit besonders empfindlichen Oberflächen montiert werden, bspw. schwächer ausgelegt oder gar nicht vorgesehen werden. Über die Aussteifungsrippen wird auch eine Anlage bzw. Abstützung des jeweiligen Schutzabdeckungsteils am Verbindungselement bewirkt.

Die vorliegende Erfindung beruht weiter auf dem allgemeinen Gedanken, eine Schutzabdeckung für ein solches Profilrohrsystem anzugeben, wobei diese

Schutzabdeckung zwei miteinander verbindbare Schutzabdeckungsteile aufweist, nämlich ein erstes Schutzabdeckungsteil und ein zweites Schutzabdeckungsteil und wobei an jeweils dem ersten und dem zweiten Schutzabdeckungsteil jeweils eine Rastkontur und eine Gegenrastkontur angeordnet sind, so dass diese beiden Schutzabdeckungsteile über zwei Rastverbindungen aneinander festlegbar sind. Mittels einer derartigen Schutzabdeckung können die bereits in den vorherigen Absätzen beschriebenen Vorteile, insbesondere die Abdeckung von Oberflächen von Verbindungselementen in Eckbereichen erreicht werden, wodurch ein Anstoßen von oberflächenempfindlichen Bauteilen nicht mehr unbedingt zu einer Beschädigung derselben führt.

Zweckmäßig sind/ist das erste Schutzabdeckungsteil und/oder das zweite Schutzabdeckungsteil jeweils als einstückige, gummiartige und damit weiche Kunststoffspritzgussteile ausgebildet, wodurch diese nicht nur qualitativ hochwertig, sondern zugleich auch kostengünstig hergestellt werden können. Durch die gummiartige Ausbildung lässt sich auch der Schutzeffekt erhöhen. Von großem Vorteil ist darüber hinaus, sofern das erste Schutzabdeckungsteil und das zweite Schutzabdeckungsteil als Gleichteile ausgebildet sind. In diesem Fall können mit einem einzigen Kunststoffspritzgusswerkzeug beide Schutzabdeckungsteile hergestellt werden, wodurch sich die Stückkosten wiederum reduzieren lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welcher durch die nachfolgenden Ansprüche definiert ist, zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a bis 1c: unterschiedliche Verfahrensschritte zur Montage eines erfindungsgemäßen Profilrohrsystems mit einer erfindungsgemäßen Schutzabdeckung,
- Fig. 2: die erfindungsgemäße Schutzabdeckung in einer Explosionsdarstellung,
- Fig. 3a bis 3d: unterschiedliche Montageschritte eines erfindungsgemäßen Profilrohrsystems mit einer erfindungsgemäßen Schutzabdeckung und zusätzlichen Schutzprofilen,
- Fig. 4: eine Ansicht auf eine erfindungsgemäße Schutzabdeckung mit zwei Schutzabdeckungsteilen,
- Fig. 5: eine Darstellung wie in Fig. 4, jedoch um 90°verdreht,
- Fig. 6: eine Schnittdarstellung durch die Schutzabdeckung gemäß der Fig. 4 entlang der Schnittebene A-A,
- Fig. 7: eine Ansicht auf eine weitere Ausführungsform einer erfindungsgemäßen Schutzabdeckung mit zwei Schutzabdeckungsteilen,
- Fig. 8: eine Darstellung wie in Fig. 7, jedoch um 90°verdreht,
- Fig. 9: eine Schnittdarstellung durch die Schutzabdeckung gemäß der Fig. 7 entlang der Schnittebene A-A,
- Fig. 10: eine geschnittene Ansicht auf die Schutzabdeckung gemäß den Fig. 7 bis 9.

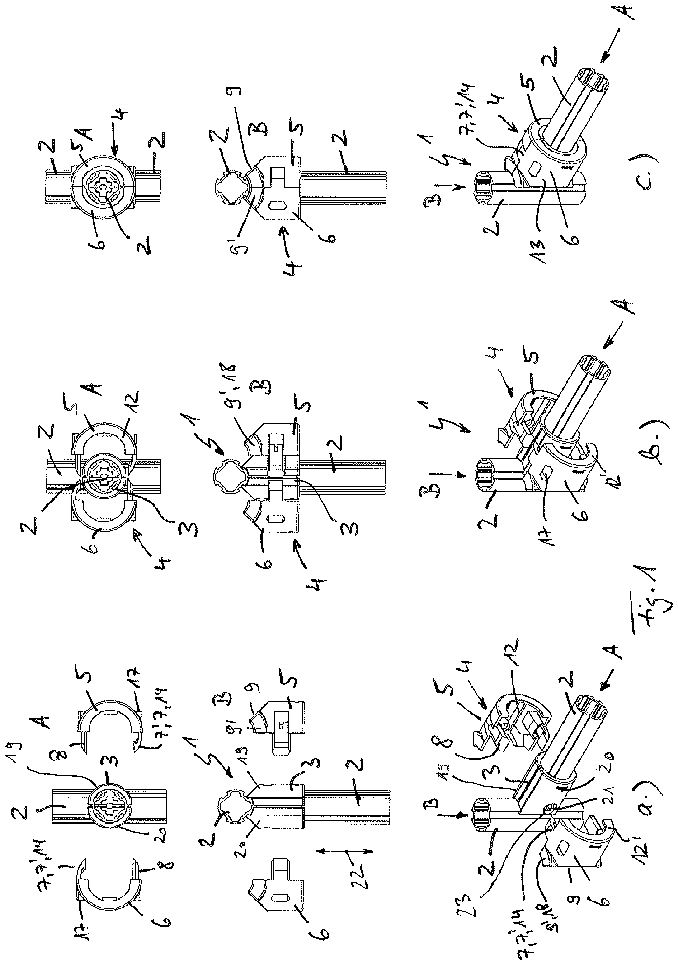

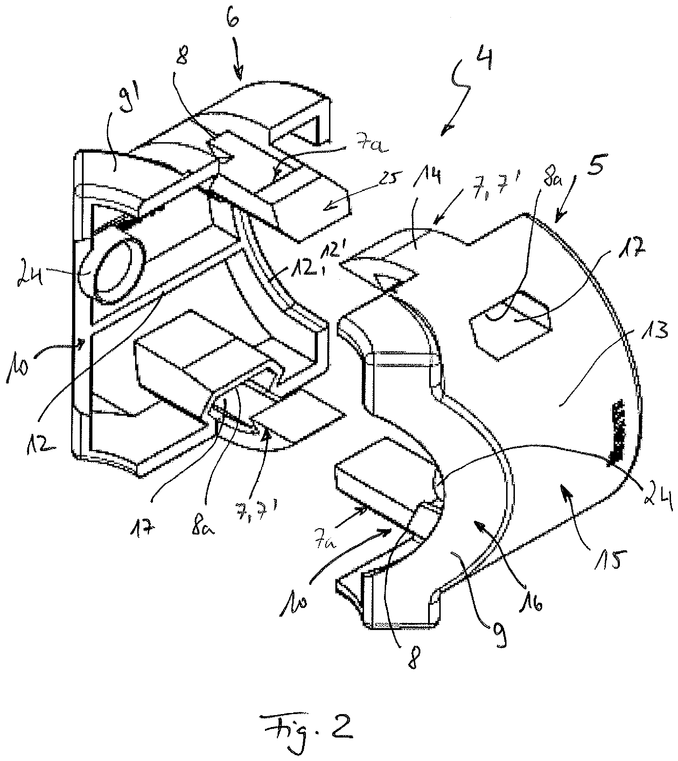

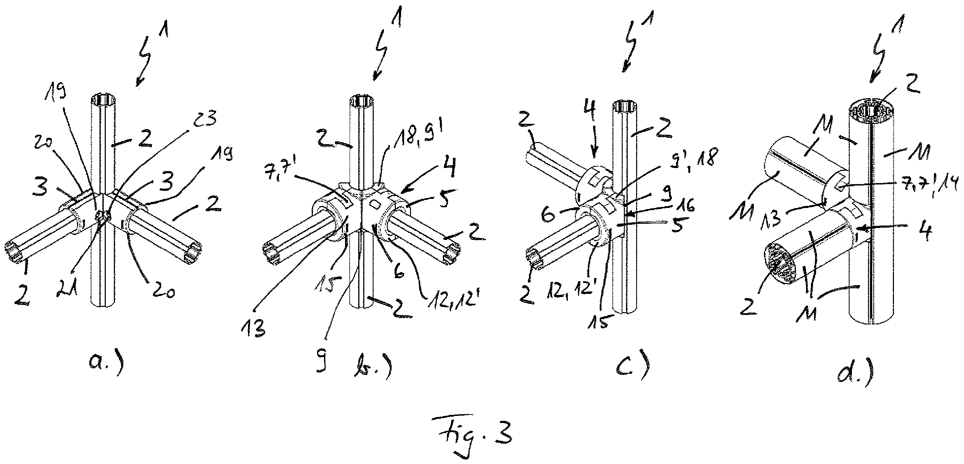

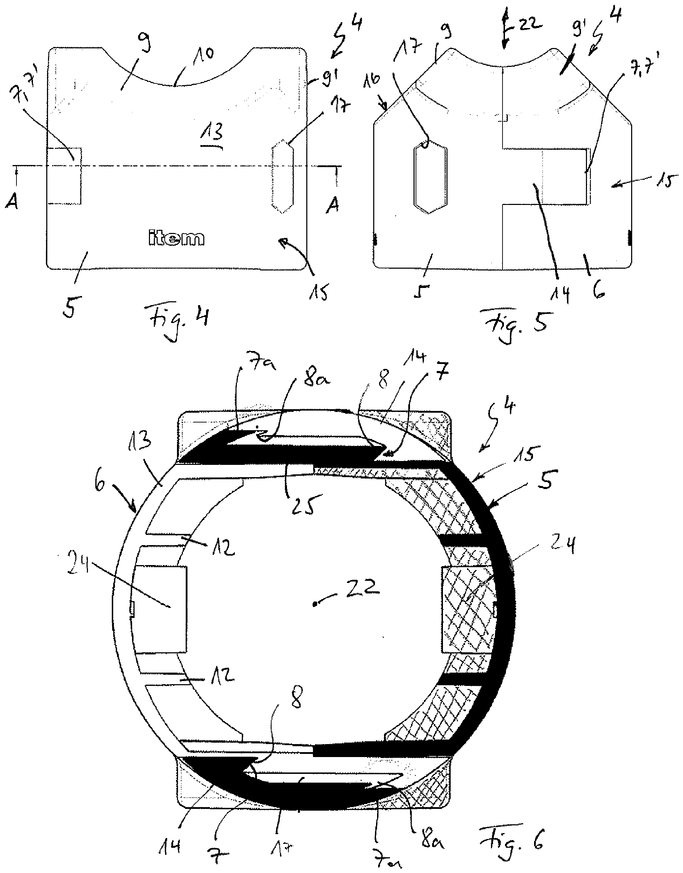

Entsprechend den Fig. 1 und 3, weist ein Profilrohrsystem 1 zumindest zwei Profilrohre 2 auf, die über jeweils ein Verbindungselement 3 im Wesentlichen orthogonal miteinander verbunden sind. Erfindungsgemäß ist nun eine Schutzabdeckung 4 (vgl. auch Fig. 2 sowie 4 bis 10) vorgesehen, die zwei miteinander verbindbare Schutzabdeckungsteile 5 und 6, nämlich ein erstes Schutzabdeckungsteil 5 und ein zweites Schutzabdeckungsteil 6 aufweist, die in montiertem Zustand das Verbindungselement 3 überdeckt/überdecken. Betrachtet man dabei insbesondere die Fig. 2 sowie Fig. 4 bis 10, so kann man erkennen, dass an dem ersten Schutzabdeckungsteil 5 eine Rastkontur 7 und eine Gegenrastkontur 8 angeordnet sind, genauso wie am zweiten Schutzabdeckungsteil 6, so dass die beiden Schutzabdeckungsteile 5, 6 einfach über eine Rastverbindung, bzw. über zwei Rastverbindungen, aneinander festlegbar sind.

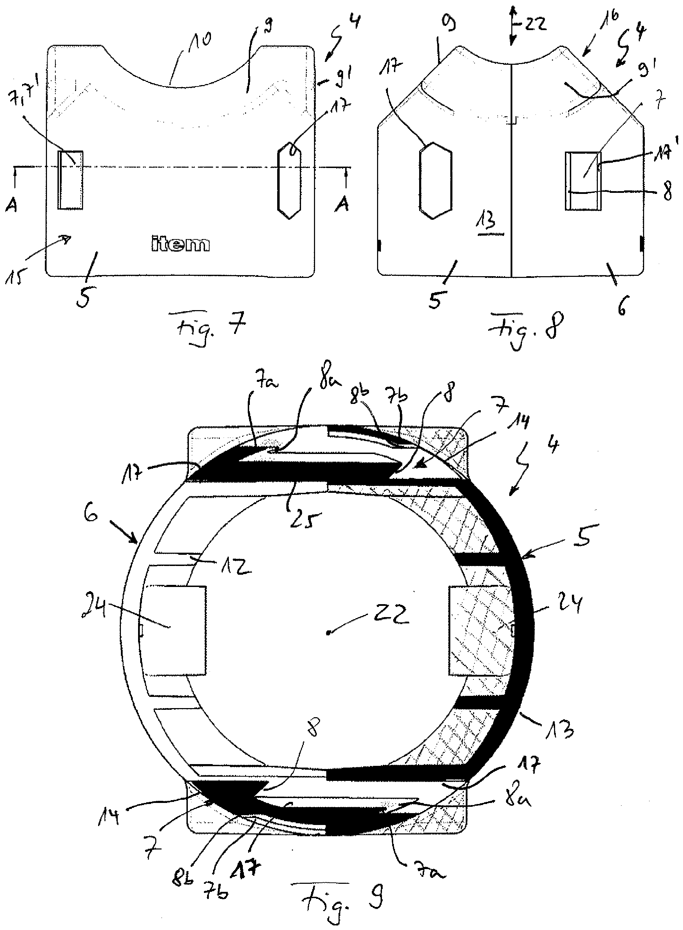

Darüber hinaus ist bei den gemäß den Fig. 1 bis 10 gezeigten Ausführungsformen an dem ersten Schutzabdeckungsteil 5 eine zweite Rastkontur 7a und eine zweite Gegenrastkontur 8a und an dem zweiten Schutzabdeckungsteil 6 eine komplementär dazu ausgebildete zweite Gegenrastkontur 8a und eine zweite Rastkontur 7a angeordnet sind, so dass die beiden Schutzabdeckungsteile 5,6 über insgesamt vier Rastverbindungen aneinander festlegbar sind. Bei der gemäß der Fig. 7 bis 10 gezeigten Ausführungsform sind an dem ersten Schutzabdeckungsteil 5 zusätzlich eine dritte Rastkontur 7b und eine dritte Gegenrastkontur 8b und an dem zweiten Schutzabdeckungsteil 6 eine komplementär dazu ausgebildete dritte Gegenrastkontur 8b und eine dritte Rastkontur 7b angeordnet, so dass die beiden Schutzabdeckungsteile 5,6 in diesem Fall über insgesamt sechs Rastverbindungen aneinander festlegbar sind.

Allen Ausführungsformen des erfindungsgemäßen Profilrohrsystems 1 ist gemein, dass das Verbindungselement 3 zwei Halbschalen 19, 20 aufweist, die über eine Schraubverbindung 21 miteinander verschraubt sind. Jede Halbschale 19, 20 besitzt dabei eine quer zur Längsrichtung des Verbindungselements 3, welche auch seiner Achse 22 entspricht (vgl. Fig. 1a), verlaufende Durchgangsöffnung 23 zur Aufnahme der Schraubverbindung 21, wobei die Schraubverbindung 21 in montiertem Zustand vertieft in der Durchgangsöffnung 23 angeordnet ist. Beide Schutzabdeckungsteile 5, 6 besitzen zudem ein Positionierelement 24 (vgl. Fig. 2, 6, 9), welches komplementär zur Durchgangsöffnung 23 ausgebildet ist und welches bei auf dem Verbindungselement 3 montiertem Schutzabdeckungsteil 5, 6 in die Durchgangsöffnung 23 eingreift und darüber das Schutzabdeckungsteil 5, 6 relativ zur jeweiligen Halbschale 19, 20 des Verbindungselements 3 lagerichtig positioniert.

Vorzugsweise sind dabei das erste Schutzabdeckungsteil 5 und/oder das zweite Schutzabdeckungsteil 6 jeweils als einstückige, insbesondere gummiartige und damit weiche und stoßabsorbierende, Kunststoffspritzgussteile ausgebildet und dadurch nicht nur kostengünstig, sondern auch qualitativ hochwertig und mit je nach ausgewähltem Kunststoff individuell frei wählbaren elastischen Eigenschaften herstellbar. Von besonderem Vorteil bei der erfindungsgemäßen Schutzabdeckung 4 ist darüber hinaus, dass die beiden Schutzabdeckungsteile 5, 6 vorzugsweise als Gleichteile ausgebildet sind, wodurch zur Herstellung der Schutzabdeckungsteile 5, 6 lediglich ein einziges Kunststoffspritzgusswerkzeug erforderlich ist.

Betrachtet man die Schutzabdeckung 4 näher, so kann man erkennen, dass diese einen hohlzylindrischen Abschnitt 15 (vgl. Fig. 1c, 2 und 3) und einen sich daran anschließenden spitzen Abschnitt 16 aufweist, wobei der spitze Abschnitt 16 zwei orthogonal zueinander verlaufende Flanken 9 besitzt, die jeweils eine bogenförmige Ausnehmung 10 für ein orthogonal zu den beiden Profilrohren 2 verlaufendes weiteres Profilrohr 2 aufweisen. Ein derartiges weiteres Profilrohr 2 ist in den Fig. 3 a bis d gezeigt, wobei dort jedoch die Ausnehmungen 10 nicht sichtbar sind. Durch die orthogonal zueinander verlaufenden Flanken 9 ist es möglich, zwei derartige Schutzabdeckungen 4 über die jeweiligen Flanken 9 direkt aneinander anliegend anzuordnen, wie dies bspw. gemäß den Fig. 3b bis 3c dargestellt ist. Hierdurch lässt sich mit der Schutzabdeckung 4 zur Abdeckung der Verbindungselemente 3 und zusammen mit Schutzprofilen 11, wie diese bspw. aus der DE 20 2015 006 861 U1 bekannt sind, eine komplette Abdeckung des Profilrohrsystems 1 erreichen, wodurch insbesondere Produktions- bzw. Fertigungsbereiche, in welchen oberflächenempfindliche Bauteile transportiert bzw. verarbeitet werden, besser geschützt werden können.

Der mit den erfindungsgemäßen Schutzabdeckungen 4 und Schutzprofilen 11 ermöglichte Schutz bezieht sich dabei nicht auf das zu schützende Profilrohrsystem 1, sondern versteht sich vielmehr als Anprallschutz, mit welchem oberflächenempfindliche Bauteile, wie bspw. Lackoberflächen an Kraftfahrzeugtüren, bei einem Anstoßen vor Beschädigungen geschützt werden sollen.

Um dabei die Schutzwirkung der jeweiligen Schutzabdeckungen 4 individuell gestalten zu können, weist das erste Schutzabdeckungsteil 5 und/oder das zweite Schutzabdeckungsteil 6 Aussteifungsrippen 12 auf, die eine Oberfläche 13, insbesondere des hohlzylindrischen Abschnitts 15, bedarfsgerecht aussteifen bzw. in montiertem Zustand gegenüber dem Verbindungselement 3 abstützen können. Dabei ist selbstverständlich klar, dass bei gewünschten weichen Oberflächen 13 auch keine derartigen Aussteifungsrippen 12 vorgesehen sein müssen. Diese Aussteifungsrippen 12 können, wie in Fig. 2 dargestellt ist, als durchgehende Stege ausgebildet sein oder können darüber hinaus nicht gezeigte Ausnehmungen aufweisen, wodurch deren Steifigkeit und auch deren Aussteifungswirkung beeinflussbar ist. Zudem können die Aussteifungsrippen 12 als Kragen 12' ausgebildet sein (vgl. Fig. 1 bis 3), der umlaufend an einer Stirnseite des hohlzylindrischen Abschnitts 15 angeordnet ist, oder als in Längsrichtung des hohlzylindrischen Abschnitts 15 ausgebildete Stege.

Betrachtet man die Rastkonturen 7 gemäß den Fig. 1 bis 6 näher, so kann man erkennen, dass diese vorzugsweise als Rasthaken 7' ausgebildet sind, wobei jeder Rasthaken 7' einen gebogenen Rücken 14 aufweist, der bei montierter Schutzabdeckung 4 oberflächenfluchtend mit der Oberfläche 13 des hohlzylindrischen Abschnitts 15 verläuft, wie dies bspw. in den Fig. 1c sowie 3b bis 3d und den Fig. 4 bis 10 dargestellt ist. Die Rastkontur 7 und die zweite Rastkontur 7a können dabei in Form von einander zugewandten aber um 180° verdrehte Rasthaken ausgebildet sein und erhöhen die Zuverlässigkeit der Verbindung der beiden Schutzabdeckungsteile 5, 6 aneinander. Bei der in den Fig. 7 bis 10 gezeigten Ausführungsform besitzt der Rasthaken 7' an seinem Rücken die dritte Rastkontur 3b und ist in einer weiteren Aufnahme 17' angeordnet.

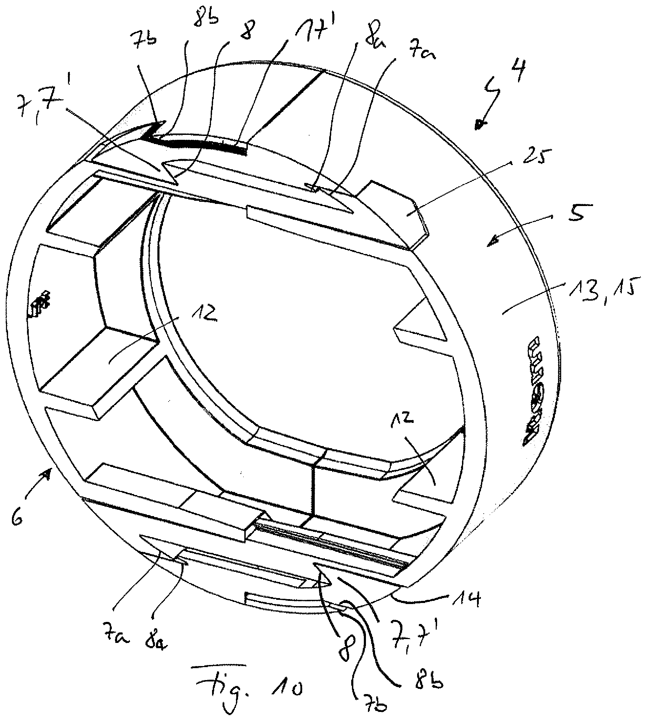

Betrachtet man nochmals die Fig. 2 bis 10, so kann man erkennen, dass jedes Schutzabdeckungsteil 5, 6 eine Aufnahme 17 aufweist, in welche die Gegenrastkontur 8 des jeweils anderen Schutzabdeckungsteils 6, 5 einschiebbar ist. Hierdurch kann eine besonders steife Fixierung der beiden Schutzabdeckungsteile 5, 6 aneinander erreicht werden. Die Aufnahme 17 weist einen sechseckförmigen Querschnitt auf, wobei ein Kragarm 25, an welchem die Gegenrastkontur 8 angeordnet ist, einen komplementär zum Querschnitt der Aufnahme 17 ausgebildeten Querschnitt aufweist und dadurch formschlüssig und passgenau in die Aufnahme 17 einschiebbar ist, wie dies in Fig. 10 gezeigt ist. Durch die besondere Gestaltung des spitzen Abschnitts 16 und der Flanken 9, weist dieser zusätzliche Flanken 9' auf, die orthogonal zu den Flanken 9 angeordnet sind und bspw. bei vier orthogonal zueinander angeordneten Schutzabdeckungen 4 eine ringförmige Stirnfläche 18 (teilweise in den Fig. 3b und 3c gezeigt) bilden, an welcher die Schutzprofile 11 direkt anliegen können. Jede Flanke 9' erstreckt sich dabei über ca. 45°.

Gemäß den Fig. 1a bis 1c sind dabei unterschiedliche Montageschritte für die Schutzabdeckung 4 auf einem jeweils zugehörigen Verbindungselement 3 dargestellt. In Fig. 1a ist dabei im oberen Bild eine Ansicht aus Richtung A auf das erfindungsgemäße Profilrohrsystem 1 gezeigt, während im mittleren Bild eine Ansicht aus Richtung B dargestellt ist. Das gemäß der Fig. 1a dargestellte Profilrohrsystem 1 weist dabei zwei Profilrohre 2 auf, die über ein Verbindungselement 3 orthogonal miteinander verbunden sind. Die Schutzabdeckung 4 ist noch in einer Explosionsdarstellung gezeigt, in welcher die beiden Schutzabdeckungsteile 5, 6 noch nicht miteinander verrastet sind.

Gemäß der Fig. 1b erfolgt nun das aufeinander Zubewegen der beiden Schutzabdeckungsteile 5, 6 und gleichzeitig das Überdecken des mit der Schutzabdeckung 4 abzudeckenden Verbindungselements 3, was gemäß der Fig. 1c seinen Abschluss findet, in dem die Rastkontur 7, 7a bzw. der Rasthaken 7' mit der zugehörigen und am anderen Schutzabdeckungsteil 5, 6 angeordneten Gegenrastkontur 8, 8a verrastet, sodass die beiden Schutzabdeckungsteile 5, 6 über eine Rastverbindung, hier über insgesamt vier Rastverbindungen, miteinander verrastet, das heißt fest verbunden sind. Der Vorteil des Rasthakens 7' mit dem gebogenen Rücken 14 ist darüber hinaus, dass dieser nicht nur oberflächenfluchtend zur Oberfläche 13 des hohlzylindrischen Abschnitts 15 angeordnet ist, sondern zu dem auch wieder leicht lösbar ist, wodurch die Schutzabdeckung 4 leicht demontierbar ist.

In analoger Weise erfolgt die Montage der Schutzabdeckung 4 gemäß den Fig. 3a bis 3d, wobei hier zwei orthogonal zueinander angeordnete Schutzabdeckungen 4 vorgesehen sind, die jeweils über ihre Flanke 9 aneinander anliegen. Gemäß der Fig. 3d sind darüber hinaus noch Schutzprofile 11 vorgesehen, die die Profilstäbe 2 außerhalb der Schutzabdeckungen 4 abdecken. Hierdurch lässt sich das gesamte Schutzprofilsystem 1 mit einem Schutzüberzug versehen.

Mit der erfindungsgemäßen Schutzabdeckung 4 und dem erfindungsgemäßen Schutzprofilsystem 1 lassen sich somit nicht nur wie bislang die einzelnen Profilrohre 2 abseits der Verbindungselemente 3 abdecken, sondern erstmals auch die Verbindungselemente 3 im Stoßbereich des jeweiligen Profilrohrs 2 mit einem anderen Profilrohr 2. Hierdurch lassen sich insbesondere oberflächenempfindliche Bauteile in Produktionsstraßen bzw. Fertigungslinien besser vor Beschädigungen schützen.

## Patentansprüche

1. Schutzabdeckung (4) für ein Profilrohrsystem (1) mit zumindest zwei
Profilrohren (2), die über ein Verbindungselement (3) im Wesentlichen orthogonal miteinander verbunden sind,
- wobei die Schutzabdeckung (4) ein mit einem ersten Schutzabdeckungsteil (5) verbindbares zweites Schutzabdeckungsteil (6) aufweist, welche in montiertem Zustand das Verbindungselement (3) überdeckt,
- wobei an dem ersten Schutzabdeckungsteil (5) eine Rastkontur (7) und eine Gegenrastkontur (8) und an dem zweiten Schutzabdeckungsteil (6) eine komplementär dazu ausgebildete Gegenrastkontur (8) und Rastkontur (7) angeordnet sind, so dass die beiden Schutzabdeckungsteile (5,6) über zwei Rastverbindungen aneinander festlegbar sind,
- wobei die Schutzabdeckung (4) einen hohlzylindrischen Abschnitt (15) und einen sich daran anschließenden spitzen Abschnitt (16) aufweist,
**dadurch gekennzeichnet, dass**
der spitze Abschnitt (16) zwei orthogonal zueinander verlaufende Flanken (9) aufweist, die jeweils eine bogenförmige Ausnehmung (10) für ein orthogonal zu den beiden Profilrohren (2) verlaufendes Profilrohr (2) aufweisen,
- dass die jeweilige Rastkontur (7) als Rasthaken (7') ausgebildet ist, der einen gebogenen Rücken (14) aufweist und der bei montierter Schutzabdeckung (4) oberflächenfluchtend mit einer Oberfläche (13) des hohlzylindrischen Abschnitts (15) verläuft.

2. Schutzabdeckung nach Anspruch 1,
**dadurch gekennzeichnet,**
**dass** an dem ersten Schutzabdeckungsteil (5) eine zweite Rastkontur (7a) und eine zweite Gegenrastkontur (8a) und an dem zweiten Schutzabdeckungsteil (6) eine komplementär dazu ausgebildete zweite Gegenrastkontur (8a) und eine zweite Rastkontur (7a) angeordnet sind, so dass die beiden Schutzabdeckungsteile (5,6) über insgesamt vier Rastverbindungen aneinander festlegbar sind.

3. Schutzabdeckung nach Anspruch 2,
**dadurch gekennzeichnet,**
**dass** an dem ersten Schutzabdeckungsteil (5) eine dritte Rastkontur (7b) und eine dritte Gegenrastkontur (8b) und an dem zweiten Schutzabdeckungsteil (6) eine komplementär dazu ausgebildete dritte Gegenrastkontur (8b) und eine dritte Rastkontur (7b) angeordnet sind, so dass die beiden Schutzabdeckungsteile (5,6) über insgesamt sechs Rastverbindungen aneinander festlegbar sind.

4. Schutzabdeckung nach einem der vorhergehenden Ansprüche,
**dadurch gekennzeichnet,**
- **dass** das erste Schutzabdeckungsteil (5) und/oder das zweite Schutzabdeckungsteil (6) jeweils als gummiartige, einstückige Kunststoffspritzgussteile ausgebildet sind/ist, und/oder
- **dass** das erste Schutzabdeckungsteil (5) und das zweite Schutzabdeckungsteil (6) als Gleichteile ausgebildet sind.

5. Schutzabdeckung nach einem der vorhergehenden Ansprüche,
**dadurch gekennzeichnet,**
**dass** das erste Schutzabdeckungsteil (5) und/oder das zweite Schutzabdeckungsteil (6) zumindest eine Aussteifungsrippe (12) aufweisen/aufweist.

6. Schutzabdeckung nach einem der vorhergehenden Ansprüche,
**dadurch gekennzeichnet,**
**dass** jedes Schutzabdeckungsteil (5, 6) eine Aufnahme (17) aufweist, in welche die Gegenrastkontur (8) des jeweils anderen Schutzabdeckungsteils (6, 5) einschiebbar ist.

7. Schutzabdeckung nach Anspruch 3 und 6,
**dadurch gekennzeichnet,**
- **dass** die Aufnahme (17) einen sechseckförmigen Querschnitt aufweist,
- **dass** ein Kragarm (25), an welchem die Gegenrastkontur (8) angeordnet ist, einen komplementär zum Querschnitt der Aufnahme (17) ausgebildeten Querschnitt aufweist und dadurch formschlüssig und passgenau in die Aufnahme (17) einschiebbar ist.

8. Profilrohrsystem (1) mit zumindest zwei Profilrohren (2), die über ein Verbindungselement (3) im Wesentlichen orthogonal miteinander verbunden sind und mit einer Schutzabdeckung (4) nach einem der vorhergehenden Ansprüche.

9. Profilrohrsystem nach Anspruch 8,
**dadurch gekennzeichnet,**
- **dass** das Verbindungselement (3) zwei Halbschalen (19, 20) aufweist, die über eine Schraubverbindung (21) miteinander verschraubt sind,
- **dass** jede Halbschale (19, 20) eine quer zur Achse (22) des Verbindungselements (3) verlaufende Durchgangsöffnung (23) zur Aufnahme der Schraubverbindung (21) aufweist, wobei die Schraubverbindung (23) in montiertem Zustand vertieft in der Durchgangsöffnung (23) angeordnet ist,
- jedes Schutzabdeckungsteil (5,6) ein Positionierelement (24) aufweist, welches komplementär zur Durchgangsöffnung (23) ausgebildet ist und welches bei auf dem Verbindungselement (3) montiertem Schutzabdeckungsteil (5,6) in die Durchgangsöffnung (23) eingreift und darüber das jeweilige Schutzabdeckungsteil (5,6) relativ zur jeweiligen Halbschale (19,20) des Verbindungselements (3) positioniert.

## Claims

1. Protective cover (4) for a profile pipe system (1) comprising at least two profile pipes (2), that are connected to one another, substantially orthogonally, via a connecting element (3),
- wherein the protective cover (4) has a second protective cover component (6) that can be connected with a first protective cover component (5), which covers the connecting element (3) in the assembled state,
- wherein a latching contour (7) and a counter-latching contour are arranged on a first protective cover component (5) and a complementary counter-latching contour (8) and latching contour (7), designed to be complementary thereto, are arranged on the second protective cover component (6), so that two protective cover components (5,6) are secured to one another via two latching connections,
- wherein the protective cover (4) has a hollow cylindrical section (15) and an adjoining pointed section (16),
**characterised in that**
the pointed section (16) has two mutually orthogonal flanks (9), which each have a curved recess (10) for a profile pipe (2) extending orthogonally to the two profile pipes (2),
- **in that** the respective latching contour (7) is designed as a latching hook (7') that has a curved back (14) and which, when the protective cover (4) is assembled, runs flush with a surface (13) of the hollow cylindrical section (15).

2. Protective cover according to claim 1,
**characterised in that**
the second latching contour (7a) and a second counter-latching contour (8a) are arranged on the first protective cover component (5), and a second counter-latching contour (8a) and a second latching contour (7a), designed to be complementary thereto, are arranged on the second protective cover component (6), so that the two protective cover components (5,6) can be secured to one another via a total of four latching connections.

3. Protective cover according to claim 2,
**characterised in that**
a third latching contour (7b) and a third counter-latching contour (8b) are arranged on the first protective cover component (5) and a third counter-latching contour (8b) and a third latching contour (7b), designed to be complementary thereto, are arranged on the second protective cover component (6), so that the two protective cover components (5,6) can be secured to one another via a total of six latching connections.

4. Protective cover according to any one of the preceding claims,
**characterised in that**
- the first protective cover component (5) and/or the second protective cover component (6) are each designed as rubber-like, one-piece injection moulded components, and/or
- **in that** the first protective cover component (5) and the second protective cover component (6) are designed as identical components.

5. Protective cover according to any one of the preceding claims,
**characterised in that**
the first protective cover component (5) and/or the second protective cover component (6) have/has a stiffening rib (12).

6. Protective cover according to any one of the preceding claims,
**characterised in that**
each protective cover component (5, 6) has a recess (17), in which the counter-latching contour (8) of the other protective cover component (6, 5) can be inserted.

7. Protective cover according to claims 3 and 6,
**characterised in that**
- the recess (17) has a hexagonal cross-section,
- **in that** a cantilever arm (25), on which the counter-latching contour (8) is arranged, has a cross-section designed to be complementary to the cross-section of the recess (17) and can thus be inserted in a form-fitting and precise manner into the recess (17).

8. Profile pipe system (1) comprising at least two profile pipes (2), which are connected together substantially orthogonally via a connecting element (3) and comprising a protective cover (4) according to any one of the preceding claims

9. Profile pipe system according to claim 8,
**characterised in that**
- the connecting element (3) has two half-shells (19, 20), which are screwed together via a screw connection (21),
- **in that** each half-shell (19, 20) has a through-opening (23) running perpendicular to the axis (22) of the connecting element (3) for receiving the screw connection (21), wherein the screw connection (23) is recessed in the through-opening (23) in the assembled state,
- each protective cover component (5,6) has a positioning element (24), which is designed to be complementary to the through opening (23) and which engages in the through opening (23) when the protective cover component (5, 6) is mounted on the connecting element (3) and, in addition, positions each protective cover component (5,6) relative to the respective half-shell (19, 20) of the connecting element (3).

## Revendications

1. Calotte de protection (4) pour un système de tubes profilés (1) comprenant au moins deux tubes profilés (2) reliés l'un à l'autre de manière sensiblement orthogonale par l'intermédiaire d'un élément de liaison (3),
- dans laquelle la calotte de protection (4) présente une seconde partie de calotte de protection (6) pouvant être reliée à une première partie de calotte de protection (5) qui, à l'état assemblé, recouvre l'élément de liaison (3),
- dans laquelle un profil d'encliquetage (7) et un profil d'encliquetage homologue (8) sont agencés au niveau de la première partie de calotte de protection (5), et un profil d'encliquetage homologue (8) et un profil d'encliquetage (7) réalisés de manière complémentaire à ceux-ci sont agencés au niveau de la seconde partie de calotte de protection (6), de sorte que les deux parties de calotte de protection (5, 6) peuvent être fixées l'une à l'autre par l'intermédiaire de deux liaisons par encliquetage,
- dans laquelle la calotte de protection (4) présente une section cylindrique creuse (15) et une section en pointe (16) se raccordant à celle-ci,
**caractérisée en ce que**
- la section en pointe (16) présente deux flancs (9) s'étendant de manière orthogonale l'un par rapport à l'autre et présentant respectivement un évidement arqué (10) destiné à un tube profilé (2) s'étendant de manière orthogonale par rapport aux deux tubes profilés (2),
- le profil d'encliquetage (7) respectif est réalisé sous la forme d'un crochet d'encliquetage (7') présentant un dos coudé (14) et s'étendant en alignement superficiel avec une surface (13) de la section cylindrique creuse (15) lorsque la calotte de protection (4) est assemblée.

2. Calotte de protection selon la revendication 1,
**caractérisée en ce qu'**
un second profil d'encliquetage (7a) et un second profil d'encliquetage homologue (8a) sont agencés au niveau de la première partie de calotte de protection (5) et un second profil d'encliquetage homologue (8a) et un second profil d'encliquetage (7a) réalisés de manière complémentaire à ceux-ci sont agencés au niveau de la seconde partie de calotte de protection (6), de sorte que les deux parties de calotte de protection (5, 6) peuvent être fixées l'une à l'autre par l'intermédiaire de quatre liaisons par encliquetage au total.

3. Calotte de protection selon la revendication 2,
**caractérisée en ce qu'**
un troisième profil d'encliquetage (7b) et un troisième profil d'encliquetage homologue (8b) sont agencés au niveau de la première partie de calotte de protection (5) et un troisième profil d'encliquetage homologue (8b) et un troisième profil d'encliquetage (7b) réalisés de manière complémentaire à ceux-ci sont agencés au niveau de la seconde partie de calotte de protection (6), de sorte que les deux parties de calotte de protection (5, 6) peuvent être fixées l'une à l'autre par l'intermédiaire de six liaisons par encliquetage au total.

4. Calotte de protection selon l'une quelconque des revendications précédentes, **caractérisée en ce que**
- la première partie de calotte de protection (5) et/ou la seconde partie de calotte de protection (6) est/sont réalisée (s) respectivement sous la forme de pièces moulées par injection en matière plastique d'un seul tenant, de type caoutchouc, et/ou
- la première partie de calotte de protection (5) et la seconde partie de calotte de protection (6) sont réalisées sous forme de pièces identiques.

5. Calotte de protection selon l'une quelconque des revendications précédentes, **caractérisée en ce que**
la première partie de calotte de protection (5) et/ou la seconde partie de calotte de protection (6) présente(nt) au moins une nervure de raidissement (12).

6. Calotte de protection selon l'une quelconque des revendications précédentes, **caractérisée en ce que**
chaque partie de calotte de protection (5, 6) présente un logement (17) au sein duquel peut être inséré le profil d'encliquetage homologue (8) de l'autre partie de calotte de protection (6, 5) respective.

7. Calotte de protection selon la revendication 3 et 6,
**caractérisée en ce que**
- le logement (17) présente une section hexagonale,
- un bras en porte-à-faux (25), au niveau duquel est agencé le profil d'encliquetage homologue (8), présente une section transversale réalisée de manière complémentaire à la section transversale du logement (17) et peut ainsi être inséré dans le logement (17) de manière ajustée et se verrouiller par complémentarité de forme.

8. Système de tubes profilés (1) comprenant au moins deux tubes profilés (2) qui sont reliés entre eux de manière sensiblement orthogonale par l'intermédiaire d'un élément de liaison (3) et comprenant une calotte de protection (4) selon l'une quelconque des revendications précédentes.

9. Système de tubes profilés selon la revendication 8,
**caractérisé en ce que**
- l'élément de liaison (3) présente deux demi-coques (19, 20) qui sont vissées l'une à l'autre par l'intermédiaire d'une liaison par vissage (21),
- chaque demi-coque (19, 20) présente un orifice traversant (23) s'étendant de manière transversale par rapport à l'axe (22) de l'élément de liaison (3) pour accueillir la liaison par vissage (21), dans lequel la liaison par vissage (23), à l'état assemblé, est agencée en retrait dans l'orifice traversant (23),
- chaque partie de calotte de protection (5, 6) présente un élément de positionnement (24) qui est réalisé de manière complémentaire par rapport à l'orifice traversant (23) et qui, lorsque la partie de calotte de protection (5, 6) est assemblée sur l'élément de liaison (3), vient en prise dans l'orifice traversant (23) et positionne la partie de calotte de protection (5, 6) respective par rapport à la demi-coque (19, 20) respective de l'élément de liaison (3).
